# EUROPEAN PATENT APPLICATION

(11) **EP 4 668 455 A1**
(43) Date of publication of application: **24.12.2025**
(21) Application number: 23937323.6
(22) Date of filing: 21.12.2023
(51) Int. Cl.: H01M 50/431, H01M 50/417, H01M 50/403, H01M 50/449, H01M 10/0525

(54) **BATTERY SEPARATOR AND PREPARATION METHOD THEREFOR, AND SECONDARY BATTERY AND ELECTRIC DEVICE**

(30) Priority: 16.05.2023 CN 202310551408
(71) Applicant: Contemporary Amperex Technology Co., Limited, Ningde, Fujian 352100 (CN)
(72) Inventor: DENG, Bokai, Ningde, Fujian 352100 (CN); XIA, Zhonghui, Ningde, Fujian 352100 (CN); YANG, Jian, Ningde, Fujian 352100 (CN); YANG, Jianrui, Ningde, Fujian 352100 (CN); WANG, Yaohui, Ningde, Fujian 352100 (CN); SUN, Chengdong, Ningde, Fujian 352100 (CN); HUANG, Siying, Ningde, Fujian 352100 (CN); OUYANG, Chuying, Ningde, Fujian 352100 (CN)
(74) Representative: Gong, Jinping
(86) International application number: PCT/CN2023/140735
(87) International publication number: WO 2024/234652

(57) **Abstract**

A battery separator and a preparation method therefor, and a secondary battery and an electric device, which relate to the field of batteries. The battery separator comprises a base film 10 and a coating 20, wherein the coating 20 is arranged on a surface of the base film 10 on the side that faces a cathode of a battery, and the materials of the coating 20 comprise a conductive material and an insulating material. When the battery separator which is obtained by arranging the coating 20 on the surface of the base film 10 on the side that faces the cathode of the battery is applied to a lithium battery, and when lithium dendrites grow to completely penetrate the side of the base film 10 which is not provided with the coating 20, the lithium dendrites are intercepted by the arranged coating 20, and do not come into direct contact with the cathode; moreover, a low-current micro-short circuit is formed by the coating 20, thereby extending the time from a short circuit to a serious accident occurring.

## Description

The present application claims priority to Chinese Patent Application No. 202310551408.7, filed with China National Intellectual Property Administration on May 16, 2023 and entitled "BATTERY SEPARATOR AND PREPARATION METHOD THEREFOR, AND SECONDARY BATTERY AND ELECTRIC DEVICE", the content of which is incorporated herein by reference in its entirety.

### TECHNICAL FIELD

The present application relates to the field of batteries, and in particular, to a battery separator and a preparation method therefor, a secondary battery, and an electric device.

### BACKGROUND

With the continuous development of the lithium battery industry, the demand for higher energy density poses challenges to battery safety, while the use of thinner separators increases the risk of penetration of separator. Lithium dendrites are one of the issues during the use of lithium batteries. During multiple charge and discharge cycles of the batteries, lithium dendrites continuously grow on the surface of lithium metal due to the uneven deposition of lithium ions. A large number of dendrites exert significant stress on the separator, which may lead to the penetration of the separator and subsequently cause catastrophic accidents such as battery short circuits, fire, gas generation, and explosion.

### SUMMARY

The primary purpose of the present application is to provide a battery separator and a preparation method therefor, a secondary battery, and an electric device, aiming to offer a solution for alleviating the risk caused by battery short circuits resulting from lithium dendrite penetration through the separator.

In a first aspect, the present application provides a battery separator. The battery separator includes:
a base film; and
a coating, where the coating is provided on a surface of the base film on a side facing a cathode of a battery, and a material of the coating includes a conductive material and an insulating material.

In the technical solution of the embodiments of the present application, by providing a conductive coating that contains a conductive material and an insulating material and has an electrical conductivity of 10²-10⁶ S/m on the surface of the base film on a side facing the cathode of the battery, the base film side of the battery separator becomes insulating, while the coating side is conductive, making this battery separator "a partially conductive separator". When the battery separator is applied in a lithium battery, if the lithium dendrites grow and completely penetrate through the uncoated side (namely the insulating side) of the base film, the lithium dendrites are intercepted by the provided conductive coating, instead of directly contacting with the cathode. Meanwhile, a low-current micro-short circuit is created by the conductive coating, thereby delaying the progression from a short circuit to a serious accident.

In some embodiments, the coating has an electrical conductivity of 10²-10⁶ S/m. By controlling the electrical conductivity of the coating within the range of 10²-10⁶ S/m, the obtained battery separator exhibits significantly alleviating effect on battery short circuits.

In some embodiments, the conductive material includes at least one of a carbon nanotube, graphene, graphene oxide, carbon black, polystyrene sulfonate, polyaniline, nickel, copper, and platinum. The use of at least one of the above substances as the conductive material ensures good conductivity.

In some embodiments, the insulating material includes at least one of boehmite, aluminum oxide, barium sulfate, magnesium oxide, magnesium hydroxide, silicon dioxide, tin dioxide, titanium oxide, calcium oxide, zinc oxide, zirconium oxide, nickel oxide, cerium oxide, zirconium titanate, barium titanate, and magnesium fluoride. The use of at least one of the above substances as the insulating material offers advantages including low cost, easy availability, and ease of regulating the electrical conductivity of the coating.

In some embodiments, the conductive material is in the form of a particle, and the conductive material has a Dv50 of 0.1-10 µm. The use of the particulate conductive material having a Dv50 of 0.1-10 µm facilitates the regulation of the thickness and apparent properties of the coating.

In some embodiments, the conductive material is in the form of a particle, and the conductive material has a Dv50 of 0.1-10 µm. By using the particulate conductive material having a Dv50 of 1-3 µm, the conductive material demonstrates improved dispersibility in the slurry used for preparing the coating, thereby enabling the resulting coating to exhibit a smoother and more uniform surface appearance.

In some embodiments, the insulating material is in the form of a particle, and the insulating material has a Dv50 of 0.1-10 µm. The use of the particulate insulating material having a Dv50 of 0.1-10 µm facilitates the regulation of the thickness and apparent properties of the coating.

In some embodiments, the insulating material is in the form of a particle, and the insulating material has a Dv50 of 0.1-10 µm. By using the particulate insulating material having a Dv50 of 1-3 µm, the insulating material demonstrates improved dispersibility in the slurry used for preparing the coating, thereby enabling the resulting coating to exhibit a smoother and more uniform surface appearance.

In some embodiments, a mass percentage of the conductive material in the coating is 30-90%. By controlling the mass percentage of the conductive material to be 30-90%, the regulation of the electrical conductivity of the coating is facilitated to meet the requirements of batteries with various structures and capacities.

In some embodiments, the mass ratio of the conductive material to the insulating material is 30-90:1-64. By controlling the addition proportion of the conductive material and the insulating material, the regulation of the electrical conductivity of the coating is facilitated.

In some embodiments, the material of the coating further includes a binder. The addition of the binder enables better adhesion of the coating to the base film, thereby improving the structural stability of the battery separator.

In some embodiments, the binder includes at least one of polyacrylate, acrylic acid, carboxymethyl cellulose, and polyvinylidene difluoride. The use of at least one of the above substances as the binder enhances adhesion to the base film.

In some embodiments, the mass ratio of the binder to the conductive material is 5-10:30-90. Controlling the addition proportion of the binder is beneficial for obtaining a coating with appropriate electrical conductivity and good adhesion to the base film.

In some embodiments, the material of the coating further includes a dispersant. The addition of the dispersant facilitates the adjustment of the dispersion state of solid substances in the coating, thereby obtaining a more uniform coating with better surface appearance quality.

In some embodiments, the dispersant includes at least one of polyethylene glycol and polyacrylamide. The use of at least one of the above substances as the dispersant enables better dispersion of solid substances.

In some embodiments, the mass ratio of the dispersant to the conductive material is 1-5:30-90. By controlling the addition proportion of the dispersant, the dispersibility of solid substances can be significantly improved, thereby reducing the process difficulties in coating processing and preparation.

In some embodiments, the material of the base film includes at least one of polyolefin, polyether, polyetheretherketone, polyimide, polytetrafluoroethylene, polyvinyl fluoride, polyvinylidene fluoride, polyvinylidene chloride, a polyethylene-propylene copolymer, and a C-F bond-containing copolymer. By using at least one of the above substances as the material for the preparation of the base film, the obtained battery separator exhibits superior overall performance.

In a second aspect, the present application provides a preparation method for the battery separator. The preparation method includes the following steps:

mixing a conductive material, an insulating material, a binder, and a solvent to prepare a coating slurry;
applying the coating slurry on a base film; and
solidifying the coating slurry on the base film to form a coating, thus obtaining the battery separator.

The coating slurry includes a conductive material and an insulating material.

In the technical solution of the embodiments of the present application, by applying the coating slurry containing the conductive material and the insulating material on one side surface of the base film and solidifying the coating slurry on the base film to form a conductive coating, when the obtained battery separator is applied in a lithium battery, if the lithium dendrites grow and completely penetrate through the uncoated side of the base film, the lithium dendrites are intercepted by the provided conductive coating, instead of directly contacting with the cathode. Meanwhile, a low-current micro-short circuit is created by the conductive coating, thereby delaying the progression from a short circuit to a serious accident.

In some embodiments, the solvent includes at least one of acetone, deionized water, methyl ethyl ketone, and 3-pentanone. The use of at least one of the above substances as the solvent facilitates the dispersion of the conductive material, the insulating material, and the like, thus obtaining a slurry with appropriate viscosity and uniform dispersion of solid substances.

In some embodiments, the solvent includes acetone. The use of acetone as the solvent enables more thorough dispersion of solid substances, and the resulting coating slurry is more evenly applied onto the base film, which is beneficial for achieving a more uniform coating.

In some embodiments, the coating slurry has a solid content of 40-45%. By controlling the solid content of the coating slurry within the range of 40-45%, the coating slurry exhibits appropriate viscosity, good coating performance, and rapid solidification speed.

In some embodiments, the step of solidifying the coating slurry on the base film to form the coating includes:
drying the base film coated with the coating slurry at a temperature of 40-45 °C for 25-30 s.

By solidifying the coating slurry through drying at 40-45 °C for 20-25 s to form the coating on the base film, the formed coating exhibits superior surface appearance quality, excellent adhesion to the base film, and rapid solidification rate.

In a third aspect, the present application provides a secondary battery. The secondary battery includes the battery separator according to the above embodiments or the battery separator prepared according to the above embodiments.

In a fourth aspect, the present application provides an electric device. The electric device includes the secondary battery according to the above embodiments.

### BRIEF DESCRIPTION OF THE DRAWINGS

To more clearly illustrate the technical solutions in the embodiments of the present application or in the prior art, the drawings required for illustrating the embodiments or description of the prior art are briefly described below. Apparently, the drawings in the following description illustrate merely some embodiments of the present application, and those of ordinary skills in the art may still derive other related drawings from these drawings without creative efforts.

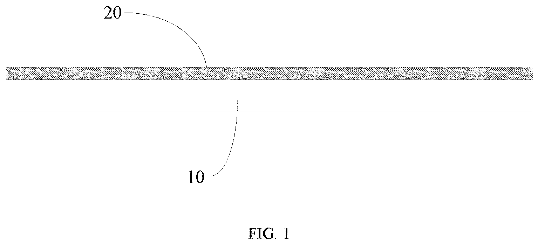

FIG. 1 is a structural schematic diagram of a battery separator according to some embodiments of the present application.

### Description of the reference numerals:

| | | | |
|---|---|---|---|
| 10 | Base film | 20 | Coating |

The realization of the objective, the functional features, and the advantages of the present application will be further described in conjunction with the embodiments, with reference to the drawings.

### DETAILED DESCRIPTION

Hereinafter, embodiments specifically disclosing the battery separator and the preparation method therefor, the secondary battery, and the electric device of the present application are disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it will be appreciated that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" represents an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

At present, judging from the development of the market situation, the application of power batteries is becoming broader. Power batteries are not only applied in energy storage power systems such as hydropower, thermal power, wind power and solar power stations, but are also widely applied in electric transportation vehicles such as electric bicycles, electric motorcycles, electric cars, as well as in military equipment, aerospace, and other fields. As the application of the power batteries becomes broader, the market demand thereof is also increasing.

At present, judging from the development of the market situation, the application of power batteries is becoming broader. Power batteries are not only applied in energy storage power systems such as hydropower, thermal power, wind power and solar power stations, but are also widely applied in electric transportation vehicles such as electric bicycles, electric motorcycles, electric cars, as well as in military equipment, aerospace, and other fields. As the application of the power batteries becomes broader, the market demand thereof is also increasing.

In the practical use of secondary batteries, lithium dendrites are one of the major issues. During multiple charge and discharge cycles of the batteries, lithium dendrites continuously grow on the surface of lithium metal due to the uneven deposition of lithium ions. A large number of dendrites exert significant stress on the separator, which may lead to the penetration of the separator and subsequently cause catastrophic accidents such as battery short circuits, fire, gas generation, and explosion. The inventors have found through research that functional coatings are currently widely used for inhibiting the growth of lithium dendrites. However, such coatings only serve to delay the lithium dendrite penetration and cannot alleviate the short circuits caused by lithium dendrite penetration through the separator. Consequently, the resulting short circuits may still lead to serious failures and accidents.

In view of the above problems, the inventors have conducted in-depth research and proposed a novel battery separator capable of reducing the short-circuit path and enabling controlled failure. Specifically, the present application provides a battery separator. Referring to FIG. 1, the battery separator includes a base film 10 and a coating 20. The coating 20 is provided on the surface of the base film 10 on a side facing the cathode of the battery. The coating 20 has an electrical conductivity of 10²-10⁶ S/m, and the material of the coating 20 includes a conductive material and an insulating material.

In the technical solution of the embodiments of the present application, by providing the coating 20 that contains a conductive material and an insulating material and has an electrical conductivity of 10²-10⁶ S/m on the surface of the base film 10 on a side facing the cathode of the battery, the base film 10 side of the battery separator becomes insulating (the resistance value of the insulating side, measured by an insulation resistance meter, is greater than 9990 MΩ), while the coating 20 side is conductive, making this battery separator "a partially conductive separator". When the battery separator is applied in a lithium battery, if the lithium dendrites grow and completely penetrate through the side that is not provided with the coating 20 (namely the insulating side) of the base film 10, the lithium dendrites are intercepted by the provided coating 20, instead of directly contacting with the cathode. Meanwhile, a low-current micro-short circuit is created by the coating 20, thereby delaying the progression from a short circuit to a serious accident. Therefore, although this may eventually lead to a battery failure, additional time may be provided for prompt warning by the battery management system, which is beneficial for significantly reducing the damage and loss caused by the serious accident.

In some embodiments of the present application, the conductive material includes at least one of a carbon nanotube, graphene, graphene oxide, carbon black, polystyrene sulfonate, polyaniline, nickel, copper, and platinum. The conductive material may be any one of the above substances or a combination of any two or more of the above substances. The use of at least one of the above substances as the conductive material offers the advantage of good conductivity, and enables easier regulation of the electrical conductivity of the coating 20 when the conductive material is used in combination with the insulating material.

In some embodiments of the present application, the insulating material includes at least one of boehmite, aluminum oxide, barium sulfate, magnesium oxide, magnesium hydroxide, silicon dioxide, tin dioxide, titanium oxide, calcium oxide, zinc oxide, zirconium oxide, nickel oxide, cerium oxide, zirconium titanate, barium titanate, and magnesium fluoride. The insulating material may be any one of the above substances or a combination of any two or more of the above substances. The use of at least one of the above substances as the insulating material offers advantages including low cost, easy availability, and easier regulation of the electrical conductivity of the coating 20 when the insulating material is used in combination with the conductive material.

In some embodiments of the present application, the conductive material is in the form of a particle, and the conductive material has a Dv50 of 0.1-10 µm. The Dv50 of 0.1-10 µm means that 50% of the particles, based on volume distribution, have a particle size of 0.1-10 µm. The use of the particulate conductive material having a Dv50 of 0.1-10 µm is beneficial for regulating the thickness of the coating 20 to obtain the coating 20 with a thickness of 1-10 µm, and improving the apparent properties of the coating 20.

In some embodiments of the present application, the conductive material is in the form of a particle, and the conductive material has a Dv50 of 0.1-10 µm. By using the particulate conductive material having a Dv50 of 0.1-10 µm, the conductive material demonstrates improved dispersibility in the slurry used for preparing the coating 20, thereby enabling the resulting coating 20 to exhibit a smoother and more uniform surface appearance.

In some embodiments of the present application, the insulating material is in the form of a particle, and the insulating material has a Dv50 of 0.1-10 µm. The use of the particulate insulating material having a Dv50 of 0.1-10 µm is beneficial for regulating the thickness of the coating 20 to obtain the coating 20 with a thickness of 1-10 µm, and improving the apparent properties of the coating 20.

In some embodiments of the present application, the insulating material is in the form of a particle, and the insulating material has a Dv50 of 0.1-10 µm. By using the particulate insulating material having a Dv50 of 0.1-10 µm, the insulating material demonstrates improved dispersibility in the slurry used for preparing the coating 20, thereby enabling the resulting coating 20 to exhibit a smoother and more uniform surface appearance.

In some embodiments of the present application, a mass percentage of the conductive material in the coating 20 is 30-90%. By controlling the mass percentage of the conductive material to be 30-90%, the regulation of the electrical conductivity of the coating 20 is facilitated to meet the requirements of batteries with various structures and capacities. Meanwhile, since the coating 20 is typically formed by slurry solidification, controlling the mass percentage of the conductive material also facilitates the regulation of the dispersibility of the conductive material in the slurry and the coating performance of the slurry.

In some embodiments of the present application, the mass ratio of the conductive material to the insulating material is 30-90:1-64. Controlling the addition amount of the insulating material facilitates the regulation of the electrical conductivity of the coating 20, and similarly, also facilitates the regulation of the dispersibility of the conductive material in the slurry and the coating performance of the slurry.

In some embodiments of the present application, the material of the coating 20 further includes a binder. The addition of the binder enables better adhesion of the coating 20 to the base film 10, thereby improving the structural stability of the battery separator to ensure the service performance of the battery.

In some specific embodiments of the present application, the binder includes at least one of polyacrylate, acrylic acid, carboxymethyl cellulose, and polyvinylidene difluoride. The binder may be any one of the above substances or a combination of any two or more of the above substances. The use of at least one of the above substances as the binder enhances the bonding of the conductive material and the insulating material to the base film 10, thereby improving the adhesion of the coating 20 to the base film 10 and further improving the structural stability of the battery separator.

In some embodiments of the present application, the mass ratio of the binder to the conductive material is 5-10:30-90. By controlling the addition proportion of the binder, the coating 20 with excellent adhesion to the base film 10 can be obtained. Moreover, the conductive material and the insulating material are more uniformly mixed and dispersed with the binder, which is beneficial for ensuring the electrical conductivity of the coating 20.

In some embodiments of the present application, the material of the coating 20 further includes a dispersant. The addition of the dispersant allows for the regulation of the dispersion state of solid substances in the slurry used for preparing the coating 20, which is conducive to reducing the processing difficulty of the slurry and improving the coating performance of the slurry. Consequently, the dispersion state of solid substances in the coating 20 can be adjusted to obtain a more uniform coating 20 with better surface appearance quality and more controllable electrical conductivity.

In some specific embodiments of the present application, the dispersant includes at least one of polyethylene glycol and polyacrylamide. The dispersant may be any one of the above substances or a combination of two of the above substances. The use of at least one of the above substances as the dispersant enables better dispersion of the conductive material, the insulating material, and the binder.

In some embodiments of the present application, the mass ratio of the dispersant to the conductive material is 1-5:30-90. By controlling the addition proportion of the dispersant, the dispersibility of solid substances in the slurry used for preparing the coating 20 can be significantly improved, which is conducive to reducing the difficulty of slurry processing and improving the coating performance of the slurry, thereby reducing the process difficulties in preparing the coating 20.

In some embodiments of the present application, the material of the base film 10 includes at least one of polyolefin, polyether, polyetheretherketone, polyimide, polytetrafluoroethylene, polyvinyl fluoride, polyvinylidene fluoride, polyvinylidene chloride, a polyethylene-propylene copolymer, and a C-F bond-containing copolymer. By using at least one of the above substances as the material for the preparation of the base film 10, the obtained battery separator exhibits superior overall performance. By using at least one of the above substances as the material for the preparation of the base film 10, the obtained battery separator exhibits superior overall performance and good heat resistance. It should be noted that the "use of at least one of the above substances" means that a polyolefin film, a polyether film, a polyetheretherketone film, a polyimide film, a polytetrafluoroethylene film, a polyvinyl fluoride film, a polyvinylidene fluoride film, a polyvinylidene chloride film, a polyethylene-propylene copolymer film, or a C-F bond-containing copolymer film is used as the base film 10; the "a combination of any two or more of the above substances may be used" means that a film made of a mixture of any two or more of the above substances is used, or a composite film synthesized by compounding of any two or more of a polyolefin film, a polyether film, a polyetheretherketone film, a polyimide film, a polytetrafluoroethylene film, a polyvinyl fluoride film, a polyvinylidene fluoride film, a polyvinylidene chloride film, a polyethylene-propylene copolymer film, and a C-F bond-containing copolymer film is used as the base film 10. In the subsequent specific embodiments of the present application, the base film 10 is described in detail by using any one of a polyolefin film, a polyether film, a polyetheretherketone film, a polyimide film, a polytetrafluoroethylene film, a polyvinyl fluoride film, a polyvinylidene fluoride film, a polyvinylidene chloride film, a polyethylene-propylene copolymer film, and a C-F bond-containing copolymer film as an example.

In a second aspect, the present application provides a preparation method for the battery separator. The preparation method includes the following steps:
mixing a conductive material, an insulating material, a binder, and a solvent to prepare a coating slurry;
applying the coating slurry on a base film 10; and
solidifying the coating slurry on the base film 10 to form a coating 20, thus obtaining the battery separator.

The coating slurry includes a conductive material and an insulating material.

In the technical solution of the embodiments of the present application, by applying the coating slurry containing the conductive material and the insulating material on one side surface of the base film 10 and solidifying the coating slurry on the base film 10 to form a coating 20 (the coating 20 has an electrical conductivity of 10²-10⁶S/m), the base film 10 side of the battery separator becomes insulating, while the coating 20 side is conductive, making this battery separator "a partially conductive separator". When the battery separator is applied in a lithium battery, if the lithium dendrites grow and completely penetrate through the side that is not provided with the coating 20 of the base film 10, the lithium dendrites are intercepted by the provided coating 20, instead of directly contacting with the cathode. Meanwhile, a low-current micro-short circuit is created by the coating 20, thereby delaying the progression from a short circuit to a serious accident. Therefore, although this may eventually lead to a battery failure, additional time may be provided for prompt warning by the battery management system, which is beneficial for significantly reducing the damage and loss caused by the serious accident.

It can be understood that a dispersant may be further added to the coating slurry to improve the dispersibility of solid substances in the slurry, such that the coating of the slurry is more uniform. Accordingly, the conductive material, the insulating material, the binder, the dispersant, and the solvent are mixed in the step of preparing the coating slurry.

Further, in some specific embodiments of the present application, the coating slurry may be prepared according to the following steps:
mixing the binder and the insulating material to obtain a first mixture;
dispersing the conductive material in the solvent to obtain a second mixture; and
mixing the first mixture and the second mixture to prepare the coating slurry.

The dispersion of the conductive material in the solvent may be carried out by means of ultrasonic treatment to ensure a more uniform and rapid dispersion of the conductive material. In addition, the mixing of the first mixture and the second mixture may be performed under heating and stirring conditions to facilitate rapid and uniform dispersion of the materials. For example, the mixing may be performed under stirring at a temperature of 55-65 °C for 20-30 h.

In some embodiments of the present application, the solvent includes at least one of acetone, deionized water, methyl ethyl ketone, and 3-pentanone. The use of at least one of the above substances as the solvent facilitates thorough dispersion of the conductive material, the insulating material, and the binder, thus obtaining a slurry with appropriate viscosity and uniform dispersion of solid substances.

In some specific embodiments of the present application, the solvent includes acetone. The use of acetone as the solvent enables more thorough dispersion of solid substances, and the resulting coating slurry is more evenly applied onto the base film 10, which is beneficial for achieving a more uniform coating 20.

In some embodiments of the present application, the coating slurry has a solid content of 40-45%. By controlling the solid content of the coating slurry within the range of 40-45%, the coating slurry exhibits appropriate viscosity, good coating performance, and rapid solidification speed, and the difficulty of coating slurry preparation is also reduced.

In some embodiments of the present application, the step of solidifying the coating slurry on the base film 10 to form the coating 20 includes:
drying the base film 10 coated with the coating slurry at a temperature of 40-45 °C for 25-30 s.

By solidifying the coating slurry through drying at 40-45 °C for 20-25 s to form the coating 20 on the base film 10, the solvent in the coating slurry is almost completely evaporated, and the formed coating 20 exhibits superior surface appearance quality, excellent adhesion to the base film 10, and rapid solidification rate.

In a third aspect, the present application provides a secondary battery. The secondary battery includes the battery separator according to the above embodiments or the battery separator prepared according to the above embodiments.

The secondary battery includes the battery separator according to the above embodiments, and also includes a positive electrode plate, a negative electrode plate, and an electrolyte. The secondary battery may be a battery cell. Taking a lithium-ion battery as an example, the lithium-ion battery cell primarily operates through the movement of lithium ions between the positive electrode plate and the negative electrode plate. In cylindrical battery cells, the trilayer film structure is wound into an electrode assembly with a cylindrical shape, while in rectangular parallelepiped battery cells, the film structure is wound or stacked into an electrode assembly with a substantially rectangular parallelepiped shape.

In a typical battery cell structure, the battery cell includes a shell, an electrode assembly, and an electrolyte. The electrode assembly is accommodated in the shell of the battery cell, and the electrode assembly includes a positive electrode plate, a negative electrode plate, and a separator. The shell includes a shell and an end cover. The shell includes an accommodating cavity formed by a plurality of walls and an opening. The end cover is disposed at the opening to close the accommodating cavity. The accommodating cavity further accommodates an electrolyte in addition to the electrode assembly. The positive electrode plate and negative electrode plate in the electrode assembly include tabs. To ensure the passing of a large current without fusing, there are a plurality of positive electrode tabs that are stacked together, and there are a plurality of negative electrode tabs that are stacked together. The tabs are electrically connected to electrode terminals located outside the battery cell via a connecting member, and the electrode terminals generally include a positive electrode terminal and a negative electrode terminal. For a rectangular parallelepiped battery cell, the electrode terminals are generally provided at the end cover. A plurality of battery cells are connected in series and/or in parallel via electrode terminals to be applied to various application scenarios.

A battery composed of a cell formed by means of winding is called a wound battery. A wound battery is also known as a cell, and industry professionals call it a jelly roll. Compared with a flat plate battery, the wound battery is formed by high-pressure winding of electrode plates with approximately 1 mm thickness. Through a specialized process, the battery is endowed with the following characteristics: super-strong high-rate discharge capability, with a maximum discharge rate of 18-30 C; excellent high/low temperature performance, capable of functioning from -55 °C to 150 °C; stable high output voltage and higher energy density; robust structure, with exceptional shock resistance; no free electrolyte (such as using colloidal acid), capable of functioning when placed in any direction; capable of fast charging, achieving over 95% charge within 40 min (at 1 C rate); ultra-long service life, capable of achieving a designed floating charge service life of no less than 8 years; and exceptional tolerance to low-current deep discharge.

The electrolyte used in the present application may be an electrolyte known in the art, which includes an organic solvent, a lithium salt, and an additive; the separator that can be used in the present application may be a separator known in the art.

The secondary battery provided by the present application incorporates all the beneficial effects of the above battery separator, which is not described in detail here.

The secondary battery may be a battery module. The battery module is designed to protect the battery cells from external impacts, heat, vibration, and the like, and is formed by electrically connecting a certain number of secondary batteries and putting the secondary batteries within a frame. A conventional battery module typically includes two end plates. A plurality of battery cells (secondary batteries) are arranged between the two end plates. The end plate with an output electrode of the battery module is also called an output electrode end plate, and the end plate without the output electrode of the battery module is also called a non-output electrode end plate.

The secondary battery may be a battery pack. In some battery production and processing technologies, a plurality of battery cells are integrated into a battery module, and then the battery module is packaged in a battery case to form the battery pack. In the battery pack, a row of a plurality of battery modules may be packaged, or a plurality of rows of battery modules may be packaged. The arrangement of the plurality of rows of battery modules may be double rows and a plurality of columns, a plurality of rows and double columns, a plurality of rows and a plurality of columns, and the like. Taking a battery pack in which double rows and a plurality of columns of battery modules are packaged as an example, the first end plate in each column is generally a head output electrode end plate, two adjacent end plates between two rows of battery modules are middle non-output electrode end plates, and the last end plate in each column is a tail non-output electrode end plate. The head output electrode end plate and one of the middle non-output electrode end plates belong to the first row of battery modules, and one of the middle non-output electrode end plates and the tail output electrode end plate belong to the second row of battery modules.

In a fourth aspect, the present application provides an electric device. The electric device includes the secondary battery according to the above embodiments.

The electric device provided by the present application includes, but is not limited to, a mobile phone, a portable device, a laptop, an electric bicycle, an electric vehicle, a ship, a spacecraft, an electric toy, an electric tool, and the like. For example, the spacecraft includes an airplane, a rocket, a space shuttle, a spaceship, and the like. The electric toy includes a stationary or mobile electric toy, such as a game console, an electric vehicle toy, an electric ship toy, and an electric airplane toy. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, or an electric planer.

The electric device provided by the present application incorporates all the beneficial effects of the above battery separator, which is not described in detail here.

Hereinafter, examples of the present application are described. The examples described below are illustrative and are merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### Example 1

The battery separator included a polypropylene base film (with a thickness of 4 µm and a surface density of 3 g/m²) and a coating provided on the surface of the polypropylene base film on a side facing the cathode of the battery. The coating had a thickness of 1 µm and an electrical conductivity of 10²-10⁶ S/m. The material of the coating included a conductive material particle (carbon nanotubes, with an average length of 3 µm and an electrical conductivity of 207 S/m), an insulating material particle (silicon dioxide, with a Dv50 of 5 µm), and a binder (polyvinylidene difluoride). The conductive material particle, the insulating material particle, and the binder were present in a mass ratio of 30:2:3.

### Example 2

The battery separator included a polypropylene base film (with a thickness of 6 µm and a surface density of 4 g/m²) and a coating provided on the surface of the polypropylene base film on a side facing the cathode of the battery. The coating had a thickness of 2 µm and an electrical conductivity of 10²-10⁶ S/m. The material of the coating included a conductive material particle (graphene, with a Dv50 of 10 µm), an insulating material particle (aluminum oxide, with a Dv50 of 0.1 µm), and a binder (polyacrylate). The conductive material particle, the insulating material particle, and the binder were present in a mass ratio of 40:1:5.

### Example 3

The battery separator included a polypropylene base film (with a thickness of 8 µm and a surface density of 5 g/m²) and a coating provided on the surface of the polypropylene base film on a side facing the cathode of the battery. The coating had a thickness of 4 µm and an electrical conductivity of 10²-10⁶ S/m. The material of the coating included a conductive material particle (graphene oxide, with a Dv50 of 8 µm), an insulating material particle (zinc oxide, with a Dv50 of 1 µm), and a binder (acrylic acid). The conductive material particle, the insulating material particle, and the binder were present in a mass ratio of 50:5:8.

### Example 4

The battery separator included a polypropylene base film (with a thickness of 10 µm and a surface density of 6 g/m²) and a coating provided on the surface of the polypropylene base film on a side facing the cathode of the battery. The coating had a thickness of 4 µm and an electrical conductivity of 10²-10⁶ S/m. The material of the coating included a conductive material particle (carbon nanotubes, with an average length of 3 µm), an insulating material particle (silicon dioxide, with a Dv50 of 5 µm), a binder (polyvinylidene difluoride), and a dispersant (polyethylene glycol). The conductive material particle, the insulating material particle, the binder, and the dispersant were present in a mass ratio of 30:2:3:2.

### Example 5

The battery separator included a polypropylene base film (with a thickness of 12 µm and a surface density of 7 g/m²) and a coating provided on the surface of the polypropylene base film on a side facing the cathode of the battery. The coating had a thickness of 5 µm and an electrical conductivity of 10²-10⁶ S/m. The material of the coating included a conductive material particle (carbon black, with a Dv50 of 6 µm), an insulating material particle (cerium oxide, with a Dv50 of 3 µm), a binder (polyacrylate, acrylic acid, and carboxymethyl cellulose in a mass ratio of 1:1:1), and a dispersant (polyethylene glycol). The conductive material particle, the insulating material particle, the binder, and the dispersant were present in a mass ratio of 60:10:8:4.

### Example 6

The battery separator included a polypropylene base film (with a thickness of 14 µm and a surface density of 8 g/m²) and a coating provided on the surface of the polypropylene base film on a side facing the cathode of the battery. The coating had a thickness of 6 µm and an electrical conductivity of 10²-10⁶ S/m. The material of the coating included a conductive material particle (nickel, with a Dv50 of 0.1-10 µm), an insulating material particle (zirconium titanate, with a Dv50 of 10 µm), a binder (polyacrylate), and a dispersant (polyethylene glycol). The conductive material particle, the insulating material particle, the binder, and the dispersant were present in a mass ratio of 70:30:7:3.

### Example 7

The battery separator included a polypropylene base film (with a thickness of 5 µm and a surface density of 9 g/m²) and a coating provided on the surface of the polypropylene base film on a side facing the cathode of the battery. The coating had a thickness of 7 µm and an electrical conductivity of 10²-10⁶ S/m. The material of the coating included a conductive material particle (copper, with a Dv50 of 0.1-10 µm), an insulating material particle (titanium oxide, with a Dv50 of 6 µm), a binder (acrylic acid), and a dispersant (polyacrylamide). The conductive material particle, the insulating material particle, the binder, and the dispersant were present in a mass ratio of 80:50:9:4.

### Example 8

The battery separator included a polypropylene base film (with a thickness of 7 µm and a surface density of 10 g/m²) and a coating provided on the surface of the polypropylene base film on a side facing the cathode of the battery. The coating had a thickness of 8 µm and an electrical conductivity of 10²-10⁶ S/m. The material of the coating included a conductive material particle (carbon nanotubes with an average length of 1 µm and polystyrene sulfonate with a Dv50 of 3 µm in a mass ratio of 1:1), an insulating material particle (silicon dioxide with a Dv50 of 5 µm and nickel oxide with a Dv50 of 8 µm in a mass ratio of 1:1), a binder (carboxymethyl cellulose), and a dispersant (polyacrylamide). The conductive material particle, the insulating material particle, the binder, and the dispersant were present in a mass ratio of 90:64:10:5.

### Example 9

The battery separator included a polypropylene base film (with a thickness of 9 µm and a surface density of 5 g/m²) and a coating provided on the surface of the polypropylene base film on a side facing the cathode of the battery. The coating had a thickness of 9 µm and an electrical conductivity of 10²-10⁶ S/m. The material of the coating included a conductive material particle (polyaniline with a Dv50 of 0.1-10 µm, carbon black with a Dv50 of 0.1-10 µm, and platinum with a Dv50 of 0.1-10 µm in a mass ratio of 10:10:1), an insulating material particle (calcium oxide with a Dv50 of 0.1-10 µm, zirconium oxide with a Dv50 of 4 µm, barium titanate with a Dv50 of 0.1-10 µm, and magnesium fluoride with a Dv50 of 0.1-10 µm in a mass ratio of 1:1:1:1), a binder (carboxymethyl cellulose and polyacrylate in a mass ratio of 1:1), and a dispersant (polyethylene glycol). The conductive material particle, the insulating material particle, the binder, and the dispersant were present in a mass ratio of 40:20:5:1.

### Example 10

The battery separator included a polypropylene base film (with a thickness of 8 µm and a surface density of 8 g/m²) and a coating provided on the surface of the polypropylene base film on a side facing the cathode of the battery. The coating had a thickness of 10 µm and an electrical conductivity of 10²-10⁶ S/m. The material of the coating included a conductive material particle (carbon nanotubes, with an average length of 3 µm), an insulating material particle (boehmite with a Dv50 of 0.1-10 µm and tin dioxide with a Dv50 of 9 µm in a mass ratio of 3:1), a binder (polyvinylidene difluoride and acrylic acid in a mass ratio of 2:1), and a dispersant (polyethylene glycol and polyacrylamide in a mass ratio of 1:1). The conductive material particle, the insulating material particle, the binder, and the dispersant were present in a mass ratio of 30:10:10:5.

### Example 11

The structure and composition materials of the battery separator are as described in Example 1. The preparation method for the battery separator included:
(1) mixing a binder and an insulating material particle in proportion to obtain a first mixture;
(2) adding a conductive material particle into acetone for dispersion under an ultrasonic condition to obtain a second mixture;
(3) adding the first mixture into the second mixture, and stirring at 60 °C for 24 h to prepare a coating slurry; and
(4) applying the coating slurry on a polypropylene base film, and drying at 42 °C for 26 s to obtain the battery separator.

### Example 12

The structure and composition materials of the battery separator are as described in Example 1. The preparation method for the battery separator included:
(1) mixing a binder and an insulating material particle in proportion to obtain a first mixture;
(2) adding a conductive material particle into deionized water for dispersion under an ultrasonic condition to obtain a second mixture;
(3) adding the first mixture into the second mixture, and stirring at 55 °C for 30 h to prepare a coating slurry; and
(4) applying the coating slurry on a polypropylene base film, and drying at 40 °C for 30 s to obtain the battery separator.

### Example 13

The structure and composition materials of the battery separator are as described in Example 1. The preparation method for the battery separator included:
(1) mixing a binder and an insulating material particle in proportion to obtain a first mixture;
(2) adding a conductive material particle into methyl ethyl ketone for dispersion under an ultrasonic condition to obtain a second mixture;
(3) adding the first mixture into the second mixture, and stirring at 65 °C for 20 h to prepare a coating slurry; and
(4) applying the coating slurry on a polypropylene base film, and drying at 45 °C for 25 s to obtain the battery separator.

### Example 14

The structure and composition materials of the battery separator are as described in Example 1. The preparation method for the battery separator included:
(1) mixing a binder and an insulating material particle in proportion to obtain a first mixture;
(2) adding a conductive material particle into 3-pentanone for dispersion under an ultrasonic condition to obtain a second mixture;
(3) adding the first mixture into the second mixture, and stirring at 65 °C for 20 h to prepare a coating slurry; and
(4) applying the coating slurry on a polypropylene base film, and drying at 45 °C for 25 s to obtain the battery separator.

### Example 15

The structure and composition materials of the battery separator are as described in Example 3. The preparation method for the battery separator included:
(1) mixing a binder and an insulating material particle in proportion to obtain a first mixture;
(2) adding a conductive material particle into acetone for dispersion under an ultrasonic condition to obtain a second mixture;
(3) adding the first mixture into the second mixture, and stirring at 60 °C for 24 h to prepare a coating slurry; and
(4) applying the coating slurry on a polypropylene base film, and drying at 42 °C for 27 s to obtain the battery separator.

### Comparative Example 1

A polypropylene film having a thickness of 4 µm and a surface density of 3 g/m² was used as a battery separator.

### Comparative Example 2

The battery separator included a polypropylene base film layer (with a thickness of 4 µm and a surface density of 3 g/m²), a conductive coating (the conductive material in the coating was carbon nanotubes with an average length of 3 µm), and an insulating coating (the insulating material in the coating was silicon dioxide with a Dv50 of 5 µm) which were sequentially stacked.

The battery separators prepared in the examples and the battery separators provided in the comparative examples were subjected to relevant performance tests. The test methods and results are as follows:
(1) Preparation of coin battery:
   A cathode slurry with a composition of NMC (LiNi_{0.5}Mn_{0.2}Co_{0.3}O₂):Carbon:PVDF in a ratio of 8:1:1 was prepared and applied on an aluminum foil. After drying and cold pressing, the thickness of the electrode was 80 µm.
   The coin battery was assembled using 1.0 M LiPF DMC solution as the electrolyte and Li metal as the anode. A cathode with a diameter of 18 mm was paired with an anode with a diameter of 20 mm, and the battery separators prepared in the examples and the battery separators provided in the comparative examples were used for assembly, respectively.
(2) Test of lithium dendrite retention and controllable circuit generation capability of battery separator prepared in the examples:
   The prepared coin batteries were charged at a charge-discharge rate of 1.2 C (2 mA/cm²), and the occurrence of short circuits in the batteries was recorded. The results are shown in Table 1.
(3) Short circuit test under lithium dendrite conditions for battery separator prepared in the comparative examples:
   The prepared coin batteries were charged at a charge-discharge rate of 1.2 C (2 mA/cm²), and the occurrence of short circuits in the batteries was recorded. The results are shown in Table 1.

**Table 1. Short circuit test results under lithium dendrite conditions for battery separators prepared in the examples and comparative examples**

| | Charging rate | Number of cycles | Specific charge capacity | Cut-off voltage | Voltage | Current |
|---|---|---|---|---|---|---|
| Example 1 | 1.2C | 57 | 148mAh/g | 4.0V | 4.0V | 5.1mA |
| | | 60 | 165mAh/g | | 3.8V | 6.3mA |
| | | 76 | 480mAh/g | | 3.6V | 8.3mA |
| Example 2 | 1.2C | 64 | 138mAh/g | 4.0V | 4.0V | 5.4mA |
| | | 69 | 167mAh/g | | 3.8V | 6.6mA |
| | | 80 | 564mAh/g | | 3.6V | 9.7mA |
| Example 3 | 1.2C | 70 | 146mAh/g | 4.0V | 4.0V | 5.9mA |
| | | 74 | 188mAh/g | | 3.8V | 7.3mA |
| | | 88 | 488mAh/g | | 3.6V | 8.9mA |
| Example 4 | 1.2C | 66 | 158mAh/g | 4.0V | 4.0V | 6.0mA |
| | | 70 | 177mAh/g | | 3.8V | 6.6mA |
| | | 84 | 503mAh/g | | 3.6V | 9.8mA |
| Example 5 | 1.2C | 69 | 153mAh/g | 4.0V | 3.9V | 5.9mA |
| | | 77 | 202mAh/g | | 3.7V | 6.7mA |
| | | 86 | 491mAh/g | | 3.7V | 9.3mA |
| Example 6 | 1.2C | 74 | 159mAh/g | 4.0V | 3.9V | 6.4mA |
| | | 81 | 192mAh/g | | 3.7V | 6.7mA |
| | | 96 | 489mAh/g | | 3.7V | 8.9mA |
| Example 7 | 1.2C | 58 | 150mAh/g | 4.0V | 4.0V | 5.3mA |
| | | 61 | 160mAh/g | | 3.8V | 6.4mA |
| | | 77 | 470mAh/g | | 3.6V | 8.4mA |
| Example 8 | 1.2C | 60 | 155mAh/g | 4.0V | 4.0V | 5.3mA |
| | | 69 | 169mAh/g | | 3.8V | 6.4mA |
| | | 77 | 469mAh/g | | 3.6V | 8.4mA |
| Example 9 | 1.2C | 63 | 160mAh/g | 4.0V | 4.0V | 5.0mA |
| | | 71 | 170mAh/g | | 3.9V | 6.1mA |
| | | 85 | 503mAh/g | | 3.8V | 8.4mA |
| Example 10 | 1.2C | 65 | 171mAh/g | 4.0V | 4.0V | 5.2mA |
| | | 72 | 183mAh/g | | 3.9V | 6.9mA |
| | | 82 | 489mAh/g | | 3.8V | 8.1mA |
| Comparative Example 1 | 1.2C | 49 | 140mAh/g | 4.0V | 3.9V | 5.1mA |
| | | 50 | / | | 0 | 2.0A |
| Comparative Example 2 | 1.2C | 50 | 153mAh/g | 4.0V | 3.9V | 5.3mA |
| | | 51 | / | | 0 | 2.0A |

As can be seen from the comparative test results in Table 1, the battery separators prepared in the examples started to exhibit short-circuit alleviation in the battery separator at least around the 60th cycle, as evidenced by an increase in the charge capacity required to reach the cut-off voltage. For example, in the battery assembled using the battery separator prepared in Example 1, the charge capacity increased from 148 mAh/g at the 57th cycle to 165 mAh/g at the 60th cycle and finally increased to 480 mAh/g at the 76th cycle. In contrast, the battery separator prepared in the comparative examples exhibited a short circuit around the 49th cycle, characterized by a rapid drop in voltage, a sharp increase in current, and a significant internal self-discharge inside the surface battery. Therefore, compared with the separator in the comparative example that resulted in an immediate battery short circuit upon penetration by lithium dendrites, the battery separator provided with the conductive coating prepared in the examples of the present application demonstrated an alleviating effect on the short circuit after being penetrated by lithium dendrites. As such, a certain degree of early warning and post-treatment time can be provided for the operator, thereby reducing the risk of major accidents.

The above examples are only preferred examples of the present application and are not intended to limit the patent scope of the present application. For those skilled in the art, the present application can be modified and varied. Any modification, equivalent substitution, improvement, and the like made within the spirit and principle of the present application shall all fall within the patent protection scope of the present application.

## Claims

1. A battery separator, wherein the battery separator comprises:
a base film; and
a coating, wherein the coating is provided on a surface of the base film on a side facing a cathode of a battery, and a material of the coating comprises a conductive material and an insulating material.

2. The battery separator according to claim 1, wherein the coating has an electrical conductivity of 10²-10⁶ S/m.

3. The battery separator according to claim 1, wherein the conductive material comprises at least one of a carbon nanotube, graphene, graphene oxide, carbon black, polystyrene sulfonate, polyaniline, nickel, copper, and platinum.

4. The battery separator according to claim 1, wherein the insulating material comprises at least one of boehmite, aluminum oxide, barium sulfate, magnesium oxide, magnesium hydroxide, silicon dioxide, tin dioxide, titanium oxide, calcium oxide, zinc oxide, zirconium oxide, nickel oxide, cerium oxide, zirconium titanate, barium titanate, and magnesium fluoride.

5. The battery separator according to claim 1, wherein the conductive material is in the form of a particle, and the conductive material has a Dv50 of 0.1-10 µm; and/or
the insulating material is in the form of a particle, and the insulating material has a Dv50 of 0.1-10 µm.

6. The battery separator according to claim 1, wherein the conductive material is in the form of a particle, and the conductive material has a Dv50 of 1-3 µm; and/or
the insulating material is in the form of a particle, and the insulating material has a Dv50 of 1-3 µm.

7. The battery separator according to claim 1, wherein a mass percentage of the conductive material in the coating is 30-90%.

8. The battery separator according to claim 1, wherein a mass ratio of the conductive material to the insulating material is 30-90:1-64.

9. The battery separator according to claim 1, wherein the material of the coating further comprises a binder.

10. The battery separator according to claim 9, wherein the binder comprises at least one of polyacrylate, acrylic acid, carboxymethyl cellulose, and polyvinylidene difluoride; and/or
a mass ratio of the binder to the conductive material is 5-10:30-90.

11. The battery separator according to claim 1, wherein the material of the coating further comprises a dispersant.

12. The battery separator according to claim 11, wherein the dispersant comprises at least one of polyethylene glycol and polyacrylamide; and/or
a mass ratio of the dispersant to the conductive material is 1-5:30-90.

13. The battery separator according to claim 1, wherein a material of the base film comprises at least one of polyolefin, polyether, polyetheretherketone, polyimide, polytetrafluoroethylene, polyvinyl fluoride, polyvinylidene fluoride, polyvinylidene chloride, a polyethylene-propylene copolymer, and a C-F bond-containing copolymer.

14. A preparation method for the battery separator according to any one of claims 1 to 13, wherein the preparation method comprises the following steps:
mixing a conductive material, an insulating material, a binder, and a solvent to prepare a coating slurry;
applying the coating slurry on a base film; and
solidifying the coating slurry on the base film to form a coating, thus obtaining the battery separator.

15. The preparation method for the battery separator according to claim 14, wherein the solvent comprises at least one of acetone, deionized water, methyl ethyl ketone, and 3-pentanone.

16. The preparation method for the battery separator according to claim 14, wherein the solvent comprises acetone.

17. The preparation method for the battery separator according to claim 14, wherein the coating slurry has a solid content of 40-45%.

18. The preparation method for the battery separator according to claim 14, wherein the step of solidifying the coating slurry on the base film to form the coating comprises:
drying the base film coated with the coating slurry at a temperature of 40-45 °C for 25-30 s.

19. A secondary battery, wherein the secondary battery comprises the battery separator according to any one of claims 1 to 13 or a battery separator prepared by the preparation method for the battery separator according to any one of claims 14 to 18.

20. An electric device, wherein the electric device comprises the secondary battery according to claim 19.
